# EUROPÄISCHE PATENTSCHRIFT

(11) **EP 3 582 321 B1**
(45) Veröffentlichungstag und Bekanntmachung des Hinweises auf die Patenterteilung: **07.07.2021**
(21) Anmeldenummer: 19179463.5
(22) Anmeldetag: 11.06.2019
(51) Int. Cl.: H01Q 1/22, H02B 1/30, H01Q 1/42, H01Q 1/44

(54) **ANTENNEN-DACHMODUL FÜR EINEN VERTEILERSCHRANK, VERTEILERSCHRANK MIT ANTENNEN-DACHMODUL SOWIE VERFAHREN ZUM HERSTELLEN**
ANTENNA ROOF MODULE FOR A DISTRIBUTION CABINET, DISTRIBUTION CABINET WITH ANTENNA ROOF MODULE AND METHOD FOR THE PRODUCTION THEREOF
MODULE D'ANTENNES DE TOIT POUR UNE ARMOIRE DE DISTRIBUTION, ARMOIRE DE DISTRIBUTION POURVUE DE MODULE D'ANTENNES DE TOIT AINSI QUE PROCÉDÉ DE FABRICATION

(30) Priorität: 13.06.2018 DE 102018114089
(43) Veröffentlichungstag der Anmeldung: 18.12.2019
(73) Patentinhaber: Berthold Sichert GmbH, 12277 Berlin (DE)
(72) Erfinder: Graf von Hardenberg, Julian, 16775 Löwenberger Land (DE); Wegener, Niels, 14641 Wustermark / OT Elstal (DE)
(74) Vertreter: Weickmann & Weickmann PartmbB

(56) Entgegenhaltungen:
- WO-A1-2015/068359
- DE-A1-102015 115 688
- US-A1- 2006 250 311

## Beschreibung

### I. Anwendungsgebiet

Die Erfindung betrifft ein Antennen-Dachmodul mit einer darin untergebrachten Antenne, etwa einer Mobilfunkantenne, sowie ein System, welches einen Verteilerschrank und ein solches Antennen-Dachmodul umfasst. Weiterhin betrifft die Erfindung auch ein Verfahren zum Ausstatten eines Verteilerschranks mit einer Antenne

### II. Technischer Hintergrund

Um ein lückenloses Funknetz zu schaffen, hängt die Anzahl der dafür benötigten Funk-Antennen einerseits von deren Reichweite ab und andererseits davon, wie günstig oder ungünstig diese Antennen positioniert sind, um innerhalb ihres Reichweiten-Bereiches auch möglichst alle Punkte bestrahlen zu können, was insbesondere in Städten und tiefen Häuserschluchten Schwierigkeiten bereitet.

Insbesondere falls es sich bei den Funk-Antennen um Mobilfunk-Antennen handelt, sei an dieser Stelle klargestellt, dass diese Antennen in der Lage sind, sowohl Funksignale abzugeben als auch Funksignale zu empfangen, insbesondere jeweils Mobilfunk-Signale. Im Folgenden ist nur noch von Antennen die Rede, die jedoch bevorzugt diese Eigenschaften besitzen.

Mobilfunkantennen werden zu diesem Zweck heute im städtischen Bereich in der Regel möglichst hoch liegend auf Hausdächern oder Türmen, Schloten und anderen hoch liegenden Punkten montiert, und besitzen eine Reichweite von mehreren hundert Metern bis zu mehreren Kilometern.

Für die Montage an solchen hoch liegenden Punkten ist jedoch ein sehr hoher Montageaufwand erforderlich, und auch im Falle von Reparaturen und Wartungsarbeiten ist der Aufwand hoch, ganz abgesehen von der Notwendigkeit, hierfür das Einverständnis einerseits vom Gebäudebesitzer und andererseits von der zuständigen Kommune zu erhalten, was das Errichten von Funknetzen zusätzlich verzögert.

Die an solchen exponierten Lagen montierten Antennen müssen extrem witterungsbeständig und daher gut geschützt in entsprechenden Gehäusen untergebracht sein, und sind wegen ihrer großen Reichweite sehr teuer.

Dennoch kann innerhalb des Reichweitenbereiches einer solchen Mobilfunkantenne gerade an tiefliegenden Positionen, also auf der Straße oder in Gebäuden, die Empfangsstärke oftmals unbefriedigend sein. Nicht zuletzt deshalb müssen die Antennen so positioniert werden, dass sich ihre Reichweiten überdecken.

Zum Errichten eines neuen Funknetzes, beispielsweise nach LTE-Standard, müssten nach dieser Methode sehr viele hoch liegende Antennen in kurzer Zeit montiert werden und in Betrieb genommen werden, was angesichts der bereits häufig vollen Belegung eines Antennenstandpunktes bzw. eines Antennenmastes zusätzlich zum hohen Investitionsaufwand sehr schwierig sein kann.

Funknetz-Betreiber, insbesondere Telekommunikationsfirmen, die gleichzeitig Festnetze betreiben, besitzen für den Betrieb der Festnetze eine Vielzahl von bereits bestehenden Festnetz-Verteilerschränken, die meist auf öffentlichem Grund stehen oder auch auf Privatgrund, und die über zugeführte Erdkabel nicht nur mit den notwendigen Festnetz-Signalen versorgt werden, sondern auch mit Strom, da sie sehr häufig auch aktive elektrische Bauteile enthalten.

Für Festnetzbetreiber kann es daher eine kostengünstigere und auch schneller zu realisierende Möglichkeit sein, an diesen auf dem Boden stehenden sowohl über Signalleitungen als auch über Stromanschlüsse versorgten Festnetz-Verteilerschränken zusätzlich eine - dann relativ tief angeordnete - Mobilfunkantenne anzuordnen, beispielweise eine LTE-Antenne, um ein LTE-Funknetz flächendeckend aufzubauen.

Bei dieser Vorgehensweise ergeben sich unterschiedliche Vorteile und Nachteile:
Die Vorteile bestehen darin, dass bei Einhaltung bestimmter Randbedingungen keine neuen Aufstellgenehmigungen weder seitens der Kommune noch seitens eines möglicherweise privaten Grundeigentümers benötigt werden, und sowohl der Montageaufwand als auch die Zugänglichkeit zu einer solchen neuen Antenne sehr günstig sind. Zusätzlich können Antennen mit geringer Leistung verwendet werden, da sich die Festnetz-Verteilerschränke in der Regel in einem geringen Abstand zueinander befinden.

Ein weiterer Vorteil besteht darin, dass bei entsprechender Gestaltung des Gehäuses die benötigte Antenne nicht nur eine begrenzte Leistung benötigt, sondern zusätzlich auch Indoor-Antennen hierfür verwendet werden können, die besonders preisgünstig sind, sofern ein ausreichender Schutz durch das umgebende Gehäuse gewährleistet ist.

Die Nachteile bestehen darin, dass zum einen eine Vielzahl solcher Nachrüst-Antennen montiert werden muss, im Vergleich zu den Anschaffungs-, Montage- und Genehmigungskosten der weniger, aber sehr viel leistungsstärkeren üblichen Mobilfunkantennen ist dies jedoch meist dennoch die finanziell günstigere Lösung.

Beim Betrieb von Funkantennen müssen zusätzlich Immissionswerte der Funkstrahlung für die sich in der Umgebung befindenden Menschen eingehalten werden:
Abhängig von der Sendeleistung und Abstrahlcharakteristik einer solchen Antenne muss beispielsweise sichergestellt sein, dass innerhalb eines Nahbereiches um die Antenne herum sich Menschen nicht dauerhaft in einem solchen Abstrahlbereich der Antenne aufhalten können, in dem die Immissionswerte oberhalb der zulässigen Grenzwerte liegen würden.

Allerdings benötigen in einem Verteilerschrank oder dessen Dachmodul untergebrachte Antennen auch Platz für ihre Unterbringung, der dann für andere Aggregate, beispielsweise die Klimatechnik, die häufig in einem solchen Dachmodul untergebracht wird, nicht mehr oder nicht mehr vollständig zur Verfügung steht.

Die Druckschriften DE 102015115688 A1 und US 2006/250311 A1 offenbaren jeweils ein Antennen-Dachmodul mit den Merkmalen des Oberbegriffs von Anspruch 1, bei dem die Antenne in dem nach unten offenen Gesamt-Hohlraum angeordnet ist, der von den Elementen des Antennen-Dachmoduls begrenzt ist.

Aus der WO 2015/068359 A1 ist ein zur Wandmontage bestimmter Sicherungskasten mit Hauptkörper und Klappdeckel bekannt, bei dem die Antenne im Hauptkörper des Kastens aufgenommen ist und in verschiedenen Antennen-Aufnahmen platziert werden kann, darunter auch vier in in den Ecken des Hauptkörpers angeordnete, horizontale Aufnahmerohre.

### III. Darstellung der Erfindung

### a) Technische Aufgabe

Es ist daher die Aufgabe gemäß der Erfindung, eine Lösung zur Verfügung zu stellen, welche sowohl die Nachrüstung von bestehenden Verteilerschränken mit diesem Antennen-Modul erlaubt als auch das Verwenden dieses Antennenmoduls bei der Herstellung neuer Verteilerschränke und den für andere Aggregate benötigten Innenraum möglichst wenig reduziert.

### b) Lösung der Aufgabe

Diese Aufgabe wird durch die Merkmale der unabhängigen Ansprüche gelöst. Vorteilhafte Ausführungsformen ergeben sich aus den Unteransprüchen.

Hinsichtlich des Antennen-Dachmoduls wird diese Aufgabe dadurch gelöst, dass als Antenne eine PCB-Antenne benutzt wird, die in einem Hohlraum des Gehäuses des Antennen-Dachmoduls angeordnet ist, der in einer der Seitenwände oder im Dachmodul-Rahmen, oder in einem der aufrechten Stützelemente zwischen Dachelement und Dachmodul-Rahmen ausgebildet ist.

Unter PCB-Antenne wird eine Antenne verstanden, die, meist unter Verwendung von Mikrostreifen-Techniken, als gedruckte Leiterbahnen auf einer gedruckten Leiterplatte (printed circuit board = PCB) hergestellt wird. Eine solche PCB-Antenne ist meist als Patch-Antenne ausgebildet, indem also mehrere einzelne Antennen, die sogenannten Patch-Antennen, auf der Oberfläche der Leiterplatte aufgedruckt und miteinander verschaltet sind. In der Regel weist eine solche PCB-Antenne als Masseebene auf der der aufgedruckten Antenne gegenüberliegenden Seite der Leiterplatte eine Metallbeschichtung auf.

Der Vorteil ist die leichtere Herstellbarkeit, die geringen Abmessungen und die Möglichkeit, außer den Antennen auch eine Schaltung auf der Leiterplatte mit aufbringen zu können.

Wird wie im vorliegenden Fall eine Mobilfunk-Antenne benötigt, kann die Leiterplatte länglich schmal ausgebildet sein mit einer Breite von unter 2 cm und einer Länge von nicht mehr als 10 oder 12 cm

Insbesondere besitzt eine solche PCB-Antenne ein Gesamtvolumen - ohne das von der Leiterplatte wegführende Antennenkabel - welches geringer als 10 cm³, besser geringer als 8 cm³, besser geringer als 5 cm³ ist..

Dies erleichtert das Unterbringen der Antenne.

Eine solche Antenne wird in aller Regel nicht nur elektromagnetische Signale abgeben, sondern auch empfangen, wobei der Frequenzbereich von dem Zweck der Antenne, beispielsweise als Mobilfunk-Antenne, abhängt.

Vorzugsweise ist die PCB-Antenne auf einer insbesondere streifenförmigen, schmalen Elektronik-Platine ausgebildet oder aufgebracht, die vorzugsweise auch Teile der Antennen-Elektronik enthalten kann und von der ein vorzugsweise flexibles Antennenkabel wegführt, welches an der Elektronik-Platine, insbesondere der PCB-Antenne, befestigt, vorzugsweise verlötet, ist.

Vorzugsweise ist das Stützelement ein hohles Stützrohr, in dessen Inneren die PCB-Antenne geschützt angeordnet und ggfs. mittels Vergussmasse vergossen wird. Die längliche Elektronik-Platine ist dabei vorzugsweise aufrecht stehend angeordnet.

Insbesondere kann die Platine in entsprechende in Längsrichtung des Stützelementes, insbesondere Stützrohres, verlaufende Führungen mit seinen Kanten eingeschoben werden oder auch an einem Tragelement, insbesondere einer Tragplatte, die vorzugsweise einstückig zusammen mit dem Stützrohr und vorzugsweise in dessen Inneren ausgebildet ist, befestigt werden.

Damit die PCB-Antenne vor allem zu den Seiten, aber auch schräg nach oben ungehindert abstrahlen kann, bestehen das Dachelement, die Seitenwände und die Stützelemente, vorzugsweise Stützrohre, insbesondere auch der Dachmodul-Rahmen, aus einem für die elektromagnetische Strahlung der Antenne durchlässigem Material (emS-Material), vorzugsweise einem Kunststoff. Bevorzugt besteht der Dachmodul-Rahmen 4 aus einem faserverstärkten Kunststoff, beispielsweise einem Glasfaser-verstärkten Polycarbonat mit beispielsweise 5 % Glasfaser-Anteil.

Das Stützelement, insbesondere Stützrohr, kann einstückig mit seinem oberen Ende zusammen mit dem Dachelement ausgebildet sein, vorzugsweise handelt es sich jedoch um ein separates Element - welches somit auch in mehreren verschiedenen Längen vorgehalten werden kann - welches mit seinem oberen Ende an dem Dachmodul und mit seinem unteren Ende mit dem Dachmodul-Rahmen verbunden, vorzugsweise formschlüssig verbunden, ist.

Eine sehr einfache Lösung sind napfförmige Aufnahmen in der Unterseite des Dachmoduls sowie in der Oberseite des Dachmodul-Tragrahmens, in die die jeweiligen Enden des Stützelementes, insbesondere Stützrohres, passen.

Das Antennen-Dachmodul umfasst vorzugsweise eine Stecker-Schnittstelle, an der einerseits das von der Antenne kommende Antennenkabel und andererseits das von der elektrischen oder elektronischen Versorgungseinheit für die Antenne - die vorzugsweise im Innenraum des Verteilerschrankes angeordnet ist - kommende Versorgungs-Kabel angesteckt wird.

Die Stecker-Schnittstelle befindet sich nahe an dem Übergang zwischen Verteilerschrank und Antennen-Dachmodul und ist beispielsweise am Dachmodul-Tragrahmen befestigt, etwa verschraubt, und befindet sich somit im Innenraum des Dachmoduls.

Damit die Stecker-Schnittstelle vom Innenraum des Verteilerschrankes aus zum Anstecken des Versorgungskabels zugänglich ist, ist in dem in aller Regel vorhandenen oberseitigen Innenblech des Innengehäuses, welches am Traggestell des Verteilerschranks befestigt ist, im Bereich unmittelbar unterhalb der Stecker-Schnittstelle eine Durchgangsöffnung vorhanden, eventuell mit einer Dichtung gegen Staub und Feuchtigkeit zwischen der Stecker-Schnittstelle und den Rändern der Durchgangsöffnung.

In der Regel bietet das Innengehäuse, gebildet aus den einzelnen seitlichen und dem oberen Innenblech jedoch nur eine Abdichtung gegen Staub und Spritzwasser, sodass der innerhalb liegende Innenraum des Verteilerschrankes in der Regel der Schutzklasse IP 55 entspricht.

Indem die Stecker-Schnittstelle auf den Rändern der Durchgangsöffnung in dem Innenblech aufliegt, vorzugsweise mit einer Dichtung dazwischen, wird dadurch die Schutzwirkung des Innenbleches in der Regel nicht vermindert und die Schutzklasse, die das Innengehäuse oder der Verteilerschrank vorher aufwiesen, wird dadurch nicht reduziert.

Sofern im Innenraum des Dachmoduls wegen anderer Einbauten kein Raum für eine solche Stecker-Schnittstelle vorhanden ist, kann diese auch im Inneren des Verteilerschrankes, dann allerdings vorzugsweise nahe dem oberen Innenblech des Verteilerschrankes, angeordnet werden. Dann wird vorzugsweise unmittelbar darüber die Durchgangsöffnung im oberen Innenblech angeordnet, um durch diese das von oben her zugeführte Antennenkabel hindurchzuführen und an der Stecker-Schnittstelle einstecken zu können. Hinsichtlich der Abdichtung gilt analog das Gleiche wie zur zuvor vorbeschriebenen Lösung.

Um die vorgegebenen maximalen Immissionswerte elektromagnetischer Strahlung für Menschen einzuhalten, wird der Bereich unmittelbar oberhalb der Antenne sowie ein immer noch kritischer Bereich darum herum auf der Innenseite des Gehäuses des Antennen-Dachmoduls mit die elektromagnetische Strahlung abschirmendem Material (emS-Schirmmaterial) beschichtet.

Hierzu wird sowohl im Inneren des hohlen Stützrohres, indem sich die PCB-Antenne befindet, der Querschnitt durch ein solches emS-Material verschlossen, als auch der immer noch kritische Bereich in der Aufsicht betrachtet um die PCB-Antenne, insbesondere das Stützelement oder Stützrohr, das sie trägt, herum.

Das emS-Schirmmaterial wird hierfür vorzugsweise in einer entsprechenden Größe zugeschnitten an der Unterseite des Dachelements verklebt, wofür das emS-Schirmmaterial vorzugsweise eine selbstklebende Rückseite besitzt.

Die Einzelteile des Gehäuses des Antennen-Dachmoduls, also Dachelement, Seitenwände, Dachmodul-Rahmen und dazwischen angeordnete Stützelemente wie Stützrohre, sind über Verbindungselemente zu einer gemeinsam handhabbaren Einheit verbunden, wobei die Verbindungselemente vorzugsweise auch im auf dem Verteilerschrank montierten Zustand vom Innenraum des Verteilerschrankes aus her zugänglich sind.

Die streifenförmige Platine der PCB-Antenne kann in dem hohlen Stützrohr - in der Aufsicht betrachtet - in unterschiedlichen Drehlagen fixiert werden. Insbesondere besitzt das Stützrohr in seinem Inneren hierfür eine solche Ausgestaltung, dass die Platine in unterschiedlichen, möglichst gering zu einander differierenden, Drehlagen formschlüssig eingeschoben werden kann.

Da in der Aufsicht betrachtet eine solche aufrecht stehende PCB-Antenne zwar im Prinzip in alle Richtungen abstrahlt, aber nicht in alle Richtungen gleich stark, gibt es eine oder zwei, insbesondere einander gegenüberliegende, Haupt-Abstrahlrichtungen.

Die Drehlage wird in der Regel so gewählt, dass der primär zu bestrahlende Bereich in der Haupt-Abstrahlrichtung liegt.

Hinsichtlich des Systems mit Verteilerschrank und Antennen-Dachmodul wird diese Aufgabe dadurch gelöst, dass auf dem Verteilerschrank, bei dem die offenen Flächen des Traggestells vorzugsweise von Innenblechen beplankt sind, um die gewünschte Schutzklasse zu erreichen, ein Antennen-Dachmodul wie zuvor beschrieben montiert ist, was den Aufwand zum Positionieren einer Vielzahl solcher Antennen gerade im städtischen Bereich stark verringert.

Hinsichtlich des Verfahrens zum Ausstatten eines bereits vorhandenen Verteilerschrankes mit einer Antenne wird diese Aufgabe dadurch gelöst, dass von dem bereits vorhandenen Verteilerschrank zunächst einmal dessen Dach abgenommen wird und durch ein Antennen-Dachmodul wie zuvor beschriebenen, welches einen größeren Innenraum aufgrund seiner Höhe aufweist, ersetzt wird.

Dieses wird vorher vollständig ausgestattet und montiert, also
- die PCB-Antenne wie beschrieben im Gehäuse des Antennen-Dachmoduls angeordnet und fixiert,
- die Stecker-Schnittstelle am ggfs. Dachmodul-Rahmen befestigt,
- das Dachelement, die Seitenwände, der Dachmodul-Rahmen unter Verwendung der Stützelemente mittels Verbindungselementen zu einem einheitlich handhabbaren Antennen-Dachmodul verbunden und
- das Antennenkabel an der Stecker-Schnittstelle kontaktierend befestigt.

Vor diesem Zusammenbau wird ggfs. - abhängig von der Sendeleistung der Antenne und deren Position im Gehäuse des Antennen-Dachmoduls - eine Abschirmung aus emS-Schirmmaterial in kritischen Bereichen im Inneren des Antennen-Dachmodul angebracht, insbesondere im Bereich oberhalb der PCB-Antenne im Inneren des Antennen-Dachmoduls befestigt, vorzugsweise an der Unterseite des Daches des Dachelementes und / oder im oder am oberen Ende des Stützrohres, in dem sich die PCB-Antenne befindet.

Nach dem Aufsetzen und Fixieren eines solchen Antennen-Dachmoduls auf dem dachlosen vorhandenen Verteilerschrank muss lediglich das Versorgungskabel, welches von der beispielsweise im Innenraum des Verteilerschrankes montierten Versorgungseinheit für die Antenne wegführt, mit der Stecker-Schnittstelle elektrisch kontaktierend verbunden werden.

Befindet sich die Stecker-Schnittstelle dagegen im Innenraum des Verteilerschrankes, so wird das Antennenkabel erst nach dem Aufsetzen des Antennen-Dachmoduls auf dem Verteilerschrank mit der Stecker-Schnittstelle kontaktierend verbunden.

### c) Ausführungsbeispiele

Ausführungsformen gemäß der Erfindung sind im Folgenden beispielhaft näher beschrieben. Es zeigen:
- **Figur 1:**: einen Verteilerschrank mit darüber, teilweise in Explosionsdarstellung, angeordnetem erfindungsgemäßem AntennenDachmodul,
- **Figur 1a, b:**: Detaildarstellungen aus Figur 1,
- **Figur 2a:**: den Verteilerschrank mit montierten Antennen-Dachmodul gemäß Figur 1a in geschlossenem Zustand in der Frontansicht,
- **Figur 2b:**: einen vertikalen Querschnitt entlang der Linie B - B der Figur 2a,
- **Figur 3a:**: das Antennen-Dachmodul in der Aufsicht von oben,
- **Figur 3b:**: einen vertikalen Längsschnitt entlang der Linie B - B der Figur 3a,

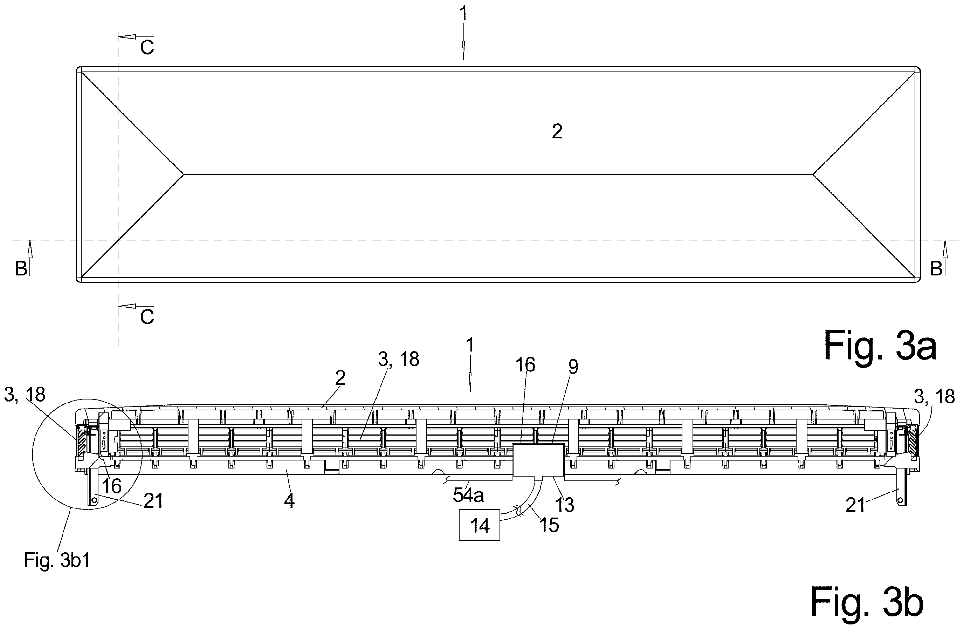

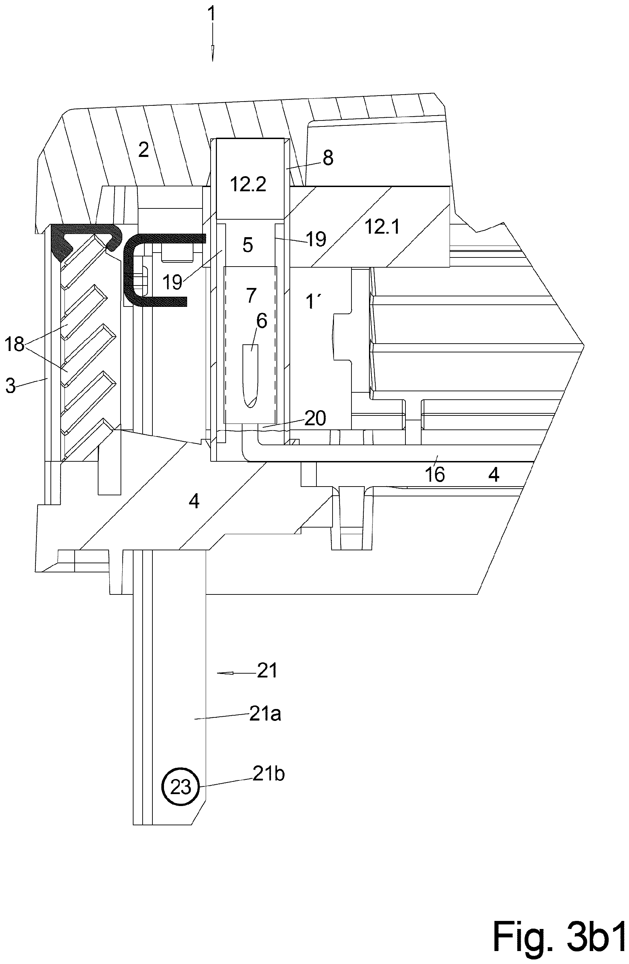

- **Figur 3b1:**: eine Detailvergrößerung aus Figur 3b,

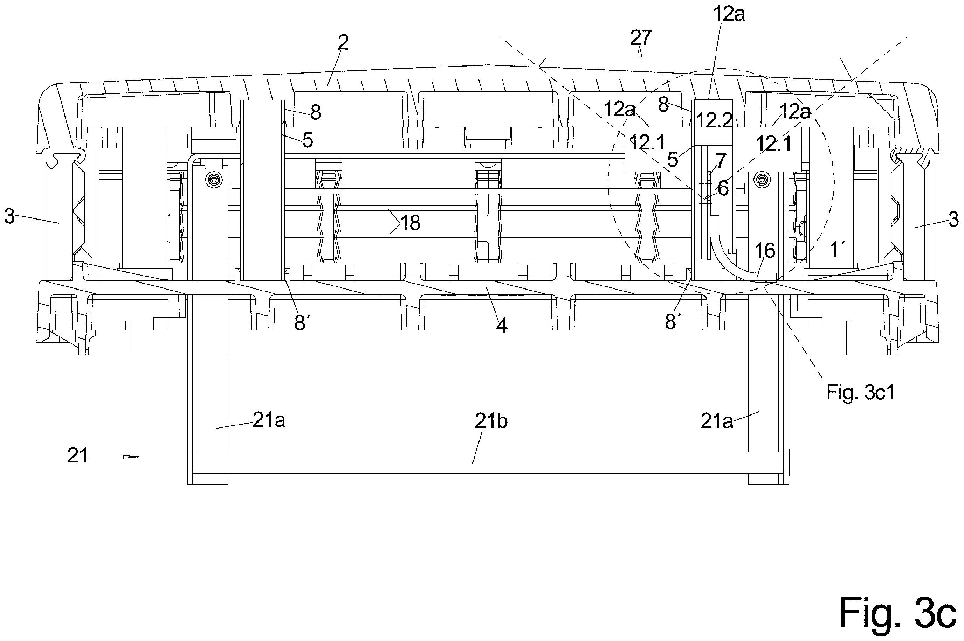

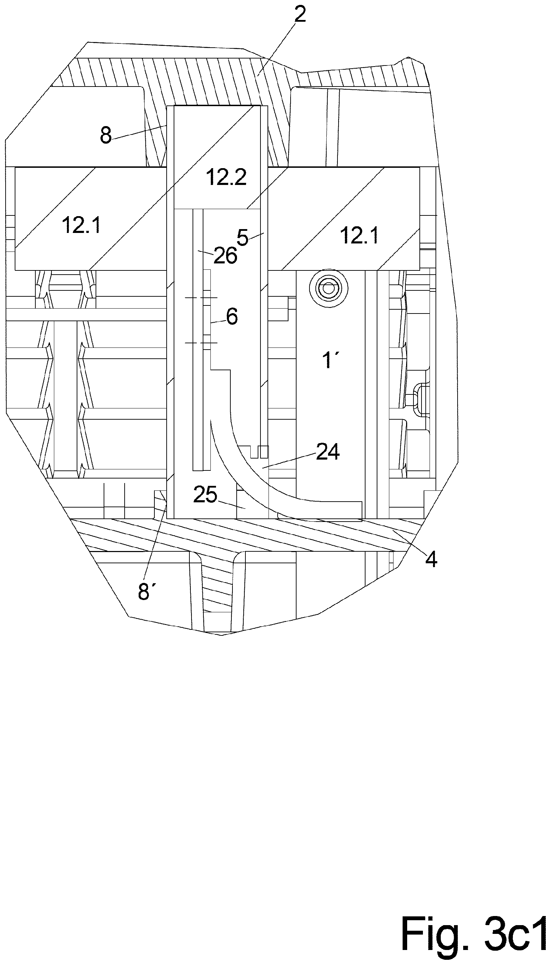

- **Figur 3c:**: einen vertikalen Querschnitt entlang der Linie C - C der Figur 3a,
- **Figur 3c1:**: eine Detailvergrößerung aus Figur 3c.

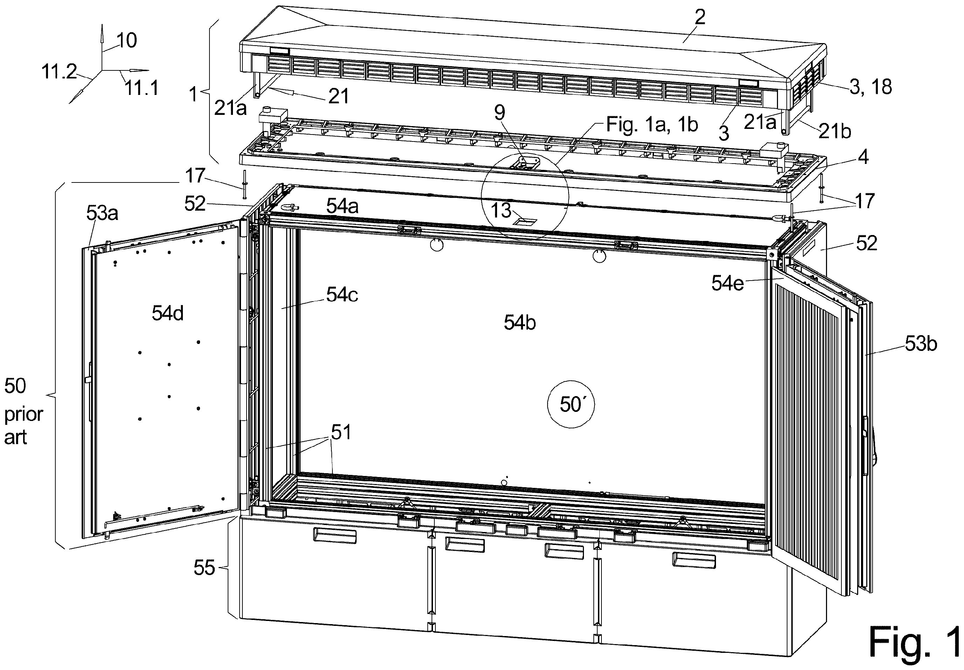

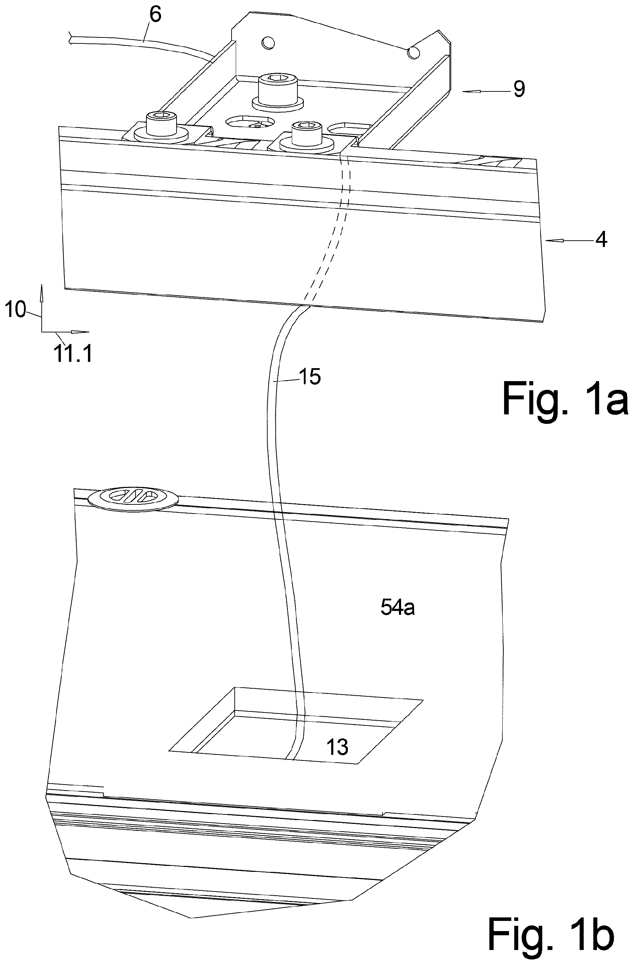

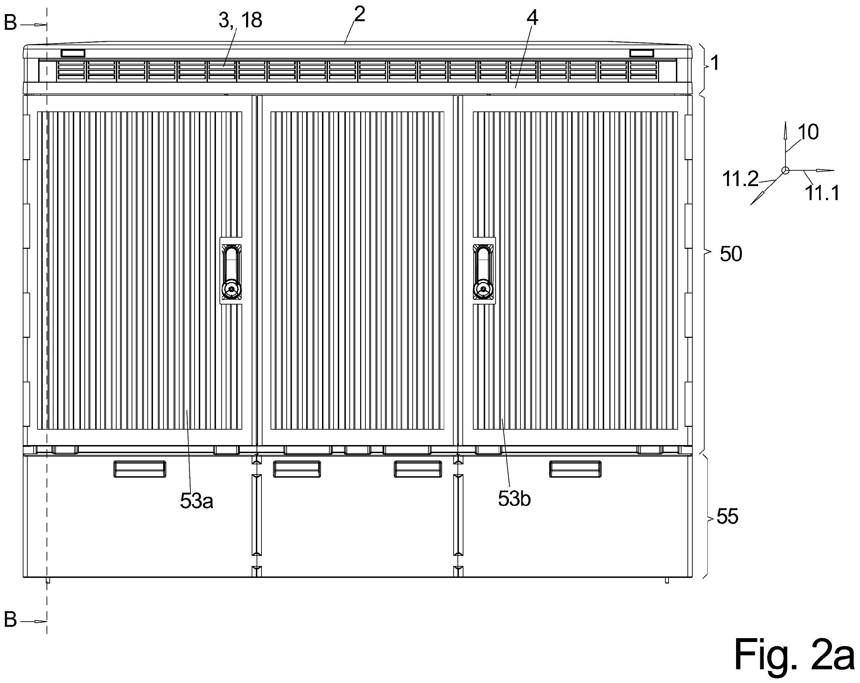

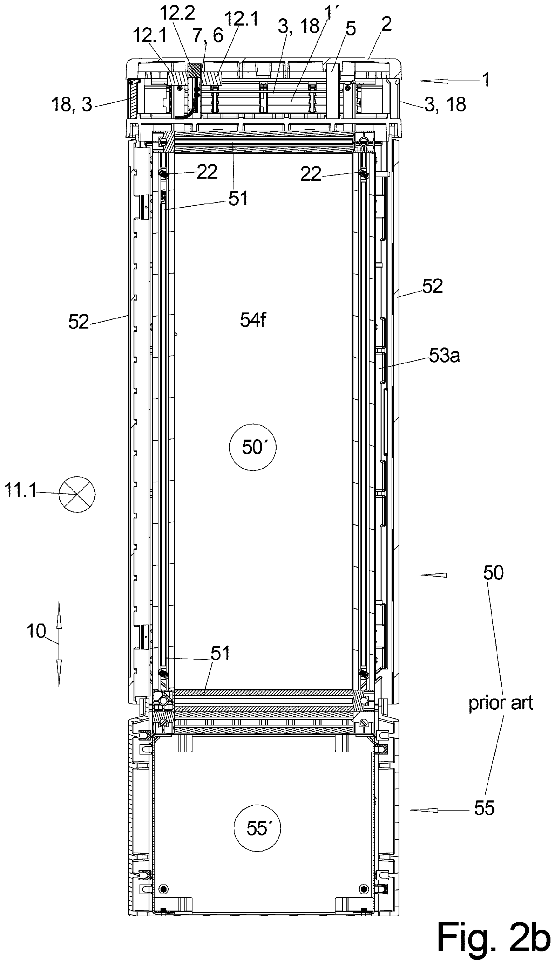

Die **Figuren 1****,** **2a****,** **2b** zeigen zunächst einmal einen bekannten Verteilerschrank 50, wie er beispielsweise als Telekommunikations-Verteilerschrank im Freien, meist auf öffentlichem Grund, etwa auf Gehwegen, aufgestellt ist.

Dabei steht der Verteilerschrank 50 auf einem umfänglich geschlossenen, oben und unten jedoch offenen, teilweise im Erdboden verbauten und befestigten Sockel 55, durch den die - nicht dargestellten - Erdkabel aus dem Untergrund herauf geführt und in den Innenraum 50' des darauf sitzenden Verteilerschrankes 15 eingeführt werden, wo sie an die dort vorhandenen aktiven und passiven elektrischen Elemente - von Klemmleisten bis zu Verstärkern oder Kühleinheiten - verbunden werden.

Ein solcher bekannter Verteilerschrank 50 besteht wie dargestellt beispielsweise aus einem eine ausreichende Stabilität bietenden Traggestell 51 aus Metallprofilen um den meist quaderförmigen Innenraum 50' des Verteilerschranks 50 herum, an dem auch alle im Innenraum 50' verbauten, nicht dargestellten, elektrischen Komponentenbefestigt werden.

Dieses Traggestell 51 ist nach unten hin mit dem Sockel 55 verbunden, meist verschraubt, und auf dem oberen Bereich dieses Traggestells 51 ist das später beschriebene Antennen-Dachmodul 1 befestigt.

Auf der Außenseite, also Vorderseite, Rückseite und den seitlichen Schmalseiten - ist das Traggestell 51 mit einer Beplankung 52 versehen, die wetterfest und meist aus Kunststoff hergestellt ist. Diese Beplankung 52 ist auf der Frontseite in Form von Türen 53a, b ausgebildet, nach deren Öffnen der Innenraum 50' zugänglich ist.

Um den Innenraum 50' zusätzlich gegen Staub und Spritzwasser zu schützen, sind vorzugsweise die offenen Flächen des Traggestells 51, insbesondere die Seitenflächen und die Oberseite, durch Innenbleche 54a - f verschlossen,, die in der Regel am Traggestell 51 befestigt sind, jedoch die Innenbleche 54d, e, die sich im Bereich der Türen 53a, b der Außenplanung befinden, an den Innenseiten dieser Türen 53a, b befestigt sind. Diese Innenbleche bilden zusammen mit dem Traggestell 51 somit das Innen-Gehäuse

Auch die Oberseite des Innenraumes 50' und damit des Traggestells 51 ist mit einem Innenblech 54a abgedeckt, welches an den oben umlaufenden vier Streben des Traggestells 51 befestigt ist.

Auf einem solchen noch dachlosen Verteilerschrank 50 muss natürlich ein Dach auf der Oberseite allein schon aus Wetterschutz-Gründen angeordnet sein, wofür ein einfaches Dachelement, also eine Platte mit etwas nach oben gewölbter Oberseite, ausreichen kann.

Im vorliegenden Fall ist jedoch zum Unterbringen einer Mobilfunk-Antenne 6 ein Antennen-Dachmodul 1 auf der Oberseite des dachlosen Verteilerschrankes 50 befestigt, welches außer dem Dachelement 2 einen im Abstand darunter angeordneten, in einer horizontalen Ebene umlaufenden, meist rechteckigen, Dachmodul-Rahmen 4 umfasst, sowie die Höhendifferenz zwischen Dachelement 2 und Dachmodul-Rahmen 4 ausfüllenden Seitenwänden 3.

Dadurch entsteht in diesem Antennen-Dachmodul 1 ein zusätzlicher Innenraum 1' zur Verfügung, in dem weitere elektrische Komponenten untergebracht werden können, die entweder im Innenraum 50' des dachlosen Verteilerschrankes 50 nicht mehr Platz finden oder aus anderen Gründen nicht in diesem Innenraum 50' sondern getrennt davon untergebracht werden sollen. Dabei kann es sich beispielsweise um die Klimatechnik für den Verteilerschrank handeln, beispielsweise Be- und Entlüftungsaggregate, Kühlaggregate und / oder eine oder mehrere groß bauende Antennen, insbesondere Mobilfunk-Antennen, die dann den für andere Einbauten verbleibenden Innenraum deutlich reduzieren würden.

Von dem Dachelement 2 ragen in den Eckbereichen senkrechte Streben 21a nach unten, von denen meist je zwei in ihrem unteren Bereich über eine in der zweiten Querrichtung 11.2 des Dachmoduls 1 mittels einer stabilisierenden Querstrebe oder einem Querrohr 21b miteinander verbunden sind.

Diese Befestigungsfortsätze 21 sind am Dachmodul-Rahmen 4 befestigt und werden zur Montage des Dachmoduls 1 auf dem Verteilerschrank 50 von oben in den Innenraum 50' oder direkt in die in vertikaler Richtung 10 verlaufenden Streben des Traggestells 51 eingeschoben und dort mittels Sicherungselementen 22 vorzugsweise formschlüssig, gesichert, die vom Innenraum 50' aus einerseits in eine Sicherungsöffnung 23 in dem Befestigungsfortsatz 21 als auch am Traggestell 51 befestigt werden, gesichert.

Das Abnehmen des Antennen-Dachmoduls 1 ist also erst nach Öffnen der Türen 53a, b des Verteilerschrankes 50 und Lösen dieser Sicherungselemente 22 von dessen Innenraum 50' aus möglich.

Ein solcher meist im öffentlichen Raum stehender Verteilerschrank 50 und damit auch das darauf aufgesetzte Antennen-Dachmodul 1 sind oft hohen Belastungen ausgesetzt, nicht nur durch die Witterung, sondern auch durch zumindest versuchten Vandalismus, auf dem Dachelement 2 sitzende oder stehende Personen oder abgelegte Gegenstände oder darauf fallende Gegenstände.

Das Gehäuse des Antennen-Dachmoduls 1 muss also einerseits ausreichend stabil ausgebildet sein, andererseits darf es die von der darin untergebrachten ein oder mehreren Antennen 6 abgegebene elektromagnetische Strahlung, die vorzugsweise horizontal und schräg nach oben abgegeben werden soll, nicht abschirmen.

Aus diesem Grund müssen die Seitenwände 3 und das Dachmodul 2 und vorzugsweise auch der Dachmodul-Tragrahmen 4 aus Kunststoff bestehen.

Da die Seitenwände 3 aus Entlüftungsgründen häufig Durchbrüche zwischen schräg angeordneten Kiemen in den Seitenwänden 3 aufweisen, sind die Seitenwände selbst kaum geeignet, um eine ausreichende, vor allem vertikale, Stabilität zu bieten.

Um zusätzlich die Höhe des Antennen-Dachmoduls auf einfache Art und Weise ändern zu können und ebenso deren Erstreckung in horizontaler Längsrichtung und Querrichtung, ist das Gehäuse des Antennen-Dachmoduls 1 modulartig aufgebaut:
Das Dachmodul 2 stützt sich über Stützelemente in Form von vertikalen Stützrohren 5, von denen mehrere über den Umfang des Dachmoduls 1 angeordnet sind, gegenüber dem Dachmodul-Tragrahmen 4 ab, indem diese Stützrohre 5 in entsprechendem, meist napfförmigen und nach unten offenen Aufnahmen 8 in der Unterseite des Dachelements 2 sowie nach oben offenen, meist ebenfalls napfförmigen Aufnahmen 8' in der Oberseite des Dachmodul-Tragrahmens 4 aufgenommen sind und in diese jeweils nur eingesteckt werden.

Zuvor wurden entsprechend der Höhe dieser Stützrohre 5 hergestellte Seitenwand-Elemente zwischen die äußeren Ränder des Dachelementes 2 und den Dachmodul-Tragrahmen 4 eingesteckt, die vorzugsweise ebenfalls formschlüssig in diesen beiden Elementen oben und unten aufgenommen sind, vorzugsweise entlang einer Schwalbenschwanz-Nut eingeschoben,.

So kann auf einfache Art und Weise
- die Länge des Dachmoduls 1 verändert werden, indem mehr oder weniger Seitenwand-Elemente hintereinander eingesetzt werden,
- in gleicher Weise auch die Erstreckung in Querrichtung, indem dort unterschiedlich lange Seitenwand-Elemente eingesetzt werden und
- für die Veränderung der Höhe müssen lediglich unterschiedlich lange Stützrohre 5 und dementsprechend unterschiedlich hohe Seitenwände oder Seitenwand-Elemente 3 zur Verfügung stehen.

Eine im Innenraum 1' eines solchen Dachmodul-Gehäuses 1 angeordnete Antenne 6 soll zum einen Witterungseinflüssen möglichst nicht ausgesetzt sein, und zum anderen nicht an Bauteilen befestigt oder angeordnet sein, die sich bei Belastung verbiegen oder gar reißen können.

Darüber hinaus soll die verwendete Antenne 6 möglichst klein und kompakt ausgebildet sein, um den Innenraum 1' des Antennen-Dachmoduls 1 möglichst wenig zu verringern, sodass dieser zusätzlich für weitere der oben genannten Anwendungen und Einbauten zur Verfügung steht.

Erfindungsgemäß wird deshalb als Antenne eine sogenannte PCB-Antenne verwendet, bei der es sich um eine auf einer üblichen Elektronik-Platine 7 aufgebrachte Antenne handelt, die in ihrer Form länglich ist, sodass die dafür benötigte Elektronik-Platine 7 streifenförmig ist, also relativ schmal im Vergleich zu ihrer Länge, mindestens also dreimal, besser fünfmal, besser achtmal so lang wie breit.

An dieser Elektronik-Platine oder Leiterplatte sind auch die Enden eines Antennen-Kabels 16 befestigt, meist verlötet, über welches diese PCB-Antenne 6 mit einer Versorgungseinheit 15, die die Antenne mit elektrischer Energie wie Signal versorgt, bzw. eine Auswerte- und Aufbereitungseinheit für die empfangenen Signale enthält, verbunden werden kann.

Vorliegend ist diese PCB-Antenne 6 in den stabilen, hohlen Stützrohren 5 angeordnet, also je eine solche PCB-Antenne 6 in einem Stützrohr 5, sodass auch mehrere PCB-Antennen 6 in einem Antennen-Dachmodul 1 angeordnet werden können. Da die Stützrohre 5 die Stabilität des Dachmoduls 1 sicherstellen, werden diese auch bei Belastung weder zerstört noch verformt, und damit auch nicht die darin untergebrachte PCB-Antenne 6.

Da das Stützrohr 5 meist oben und unten in einer umlaufend geschlossenen, napfförmigen Aufnahme 8' aufgenommen ist, ist auch die Gefahr, dass Feuchtigkeit in das Innere des Stützrohres 5 und zur PCB-Antenne 6 vordringt, sehr gering und kann durch eine dazwischen gesetzte Dichtung weiter verringert werden.

Zum Herausführen des Antennenkabels 16 ist am unteren Ende des Stützrohres 5 eine Ausnehmung 24 vorhanden, ggfs. mit einer darin eingesteckten Kabeldurchlass-Tülle aus elastischem Material zum dichten Hindurchführen des Antennenkabels 16, wie beispielsweise in **Figur 3c1** oder **Figur 3b1** gut zu erkennen.

Die Ausnehmung 24 in der Wandung des Stützrohres 5 kann sich dabei bis nach oberhalb der unteren napfförmigen Aufnahme 8' erstrecken, oder tiefer enden, wobei dann auch in dem Umfang der napfförmigen Aufnahme 8 eine Ausnehmung benötigt wird.

Um die Elektronik-Platine 7 mit der darauf angeordneten PCB-Antenne 6 positionsgenau und positionsfest im Inneren des Stützrohres 1 fixieren zu können - natürlich bevor dieses zwischen Dachelement 2 und Dachmodul-Rahmen 4 montiert wird - stehen mehrere Möglichkeiten zu Verfügung:
Wie in allen Figuren außer **Figur 3b1** dargestellt, ist die Elektronik-Platine 7 an einem Träger, beispielsweise einer Tragplatte 26, befestigt, vorzugsweise verschraubt, wie am besten in **Figur 3c** und **3c1** zu erkennen, wobei dieser Träger 26 vorzugsweise einstückiger Bestandteil des Stützrohres 5 ist oder an diesem befestigt ist.

Der Träger 26 ist so angeordnet, dass die Elektronik-Platine 7 mit ihrer Längserstreckung, der größten Erstreckung, aufrecht stehend und parallel zur Verlaufsrichtung des Stützrohres 5 in diesem angeordnet ist. Die Breite der Elektronik-Platine 7 muss hierfür natürlich geringer sein als die Breite des inneren Freiraumes des Stützrohres 5 an dieser Stelle.

Eine andere Möglichkeit ist in **Figur 3b1** dargestellt:
Dabei sind Teile der Elektronik-Platine 7, auf der sich die PCB-Antenne 6 befindet, vor oder nach Positionieren in dem Stützrohr 5 mittels eines aushärtenden Kunststoffes vergossen, sodass also die abseits der PCB-Antenne 6 liegenden Teile der Elektronik-Platine 7 und der darauf befindlichen beispielsweise Schaltungsteile oder Anschluss-Pins nach dem Aushärten von dem Kunststoff umgeben ist, der in diesem Bereich also den inneren Freiraum des Stützrohres 5 ausfüllen kann.

Dies ist grundsätzlich von Elektronikschaltungen her bekannt und verhindert zuverlässig den Zugang von Feuchtigkeit zu den eingegossen Teilen der Elektronik-Platine 7 sodass keine aufwändigen Abdichtungsmaßnahmen wie etwa eine Kabeltülle an der Ausnehmung 24 des Stützrohres 5 vorgesehen werden müssen, durch die das Antennenkabel 16 herausgeführt wird.

Die PCB-Antenne 6 selbst soll jedoch gerade nicht eingegossen werden, denn diese ist in aller Regel auf Luft als umgebendes Dielektrikum ausgelegt.

Auch um für das Vergießen die Platine 7 im Stützrohr 5 zu positionieren, können in dessen Innenumfang einander diametral gegenüber liegend in Längsrichtung des Stützrohres 5 verlaufend Führungen 19 z.B. in Form von Längsnuten vorhanden sein, in die die Platine 7 eingeschoben wird, meist mit von der Platine 7 nach unten abgehenden Antennenkabel, sodass sich die PCB-Antenne 6 darüber befindet, und dort vorpositioniert wird - etwa durch eine geringe Menge Kleber gegenüber den Führungen 19 - und anschließend vergossen wird.

Zum Vergießen ist vorzugsweise eine Stirnseite, vorzugsweise die der Ausnehmung 24 für das Antennenkabel 16 benachbarte, Stirnseite, des Stützrohres 5 verschlossen, um ein Herausfließen der zunächst flüssigen Vergussmasse 20 zu vermeiden.

Dies kann durch einen einfachen Verschluss-Stopfen am entsprechenden Ende des Stützrohres 5 erreicht werden.

Es kann je nach Sendeleistung der Antenne 6 vorkommen, dass ohne zusätzliche Maßnahmen die für den Menschen zulässigen maximalen Immissionswerte an elektromagnetischer Strahlung in bestimmten Bereichen auf der Außenseite des Antennen-Dachmoduls 1 überschritten werden, beispielsweise auf der Oberseite des Dachelementes 2 unmittelbar oberhalb der PCB-Antenne 6, da die Distanz dazwischen nur wenige Zentimeter beträgt und das Dachelement 2 ebenfalls - wie die Seitenwände 3 und das Stützrohr 5 - aus für elektromagnetische Strahlung durchlässigem emS-Material besteht.

Deshalb müssen in diesem kritischen Bereich 27 - der beispielsweise in **Figur 3c** eingezeichnet ist - Abschirmungen 12.1, 12.2 aus einem emS-Schirmmaterial zwischen der Antenne 6 und der Außenseite des Antennen-Dachmoduls 1 angeordnet werden.

Der kritischste Bereich befindet sich dabei unmittelbar oberhalb der Antenne 6, die in der Regel keinen ab Strahl-Kegel besitzt sondern im Wesentlichen in alle Raumrichtungen abstrahlt, und damit auch in Richtung der Hauptebene der die Antenne tragenden Elektronik-Platine 7 auch nach oben.

Deshalb wird - wie in den **Figuren 2b****,** **3c****,** **3c1****,** **3b1** dargestellt - zunächst einmal eine stopfenförmige oder zylindrische oder plattenförmige Abschirmung 12.2, die zumindest den Innenumfang des oberen Endes des Stützrohres 5 vollständig verschließt, insbesondere ausfüllt, in oder an diesem oberen Ende befestigt um ein Austreten von elektromagnetischer Strahlung direkt nach oben aus dem Stützrohr 5 und durch das darüber liegende Dachelement 2 zu verhindern.

Da wie in **Figur 3c** eingezeichnet, der in der Aufsicht betrachtete kritische Bereich 27 meist großflächiger ist, wird zusätzlich um das Stützrohr 5 herum meist an der Unterseite des Dachelements 2, ebenfalls eine Abschirmung 12.1, meist in Form einer Ringscheibe, durch die das Stützrohr 5 hindurch passt, befestigt.

Die Abschirmungen 12.1., 12.2 können aus einem plattenförmigen emS-Schirmmaterial, welches auch biegsam sein kann, ausgestanzt werden und da dieses Material meist eine selbstklebende Rückseite 12a besitzt, mit dieser beispielsweise an der Unterseite des Dachelementes 2 verklebt werden.

Die die Antenne 6 versorgende Versorgungseinheit 14 ist - wie in **Figur 3b** eingezeichnet - in aller Regel nicht in dem den Witterungseinflüssen zugänglichen Innenraum 1' des Dachmoduls 1 sondern im besser abgedichteten Innenraum 50' des Verteilerschrankes 50 angeordnet.

Um dennoch auf einfache Art und Weise, beispielsweise für eine Reparatur oder Austausch einer Antenne 6 das gesamte Dachmodul 1 - nach Lösen der Sicherungselemente 22 - vom Verteilerschrank 50 abnehmen zu können, ist die im Dachmodul 1 befindliche Antenne 6 nicht direkt mit dem im Innenraum 50' des Verteilerschrankes 50 angeordneten Versorgungseinheit 14 über das Antennenkabel verbunden, sondern diese Verbindung ist leicht lösbar unterbrechbar am Übergang zwischen der Oberseite des Verteilerschrankes 50 und der Unterseite des Dachmoduls 1:
Hierfür ist eine Stecker-Schnittstelle 9 - wie in **Figur 3b** dargestellt - beispielsweise am Dachmodul-Rahmen 4 befestigt und ragt in dessen Inneres hinein.

Die Stecker-Schnittstelle 9 besitzt, vorzugsweise auf ihrer Oberseite und/oder ihrer Unterseite und/oder einer ihrer Seitenflächen eine nicht dargestellte Steckerbuchse zum Anstecken des Antennenkabels 16, und - vorzugsweise an der Unterseite - wenigstens einen Steckerbuchse zum Anstecken eines Versorgungskabels 15, welches die Stecker-Schnittstelle 9 mit der Versorgungseinheit 14 verbindet. Es versteht sich von selbst, dass die Stecker für das Antennenkabel 16 und die Stecker für das Versorgungskabel 15 im Inneren der Stecker-Schnittstelle 9 elektrisch leitend miteinander verbunden sind.

Damit die entsprechende Steckerbuchse in der Stecker-Schnittstelle 9 für das von unten heranzuführende Versorgungskabel 15 überhaupt zugänglich ist, ist in dem Innenblech 54a, welches die Oberseite des Innenraumes 50' des Verteilerschrankes 50 verschließt, eine Durchgangsöffnung 13 unter derjenigen Stelle angeordnet, an der sich bei montierten Dachmodul 1 die Stecker-Schnittstelle befindet.

Vorzugsweise ist die Stecker-Schnittstelle 9 hierfür so gestaltet und in einer solchen Position am Dachmodul-Tragrahmen 4 befestigt, dass sie auf den Rändern des Innenbleches 54a um die Durchgangsöffnung 13 herum aufliegt. Dadurch wird die Schutzwirkung des Innenbleches 54a nach Aufsetzen der Stecker-Schnittstelle 9 aufrechterhalten.

Somit kann - nach Öffnen wenigstens einer der Türen 53a, b des Verteilerschrankes 50 - von dessen Innenraum 50 her, das Versorgungskabel 15 von der Stecker-Schnittstelle 9 nach unten abgezogen werden und anschließend - nach Lösen der Sicherungselemente 22 ebenfalls vom Innenraum 50' her - das gesamte Antennen-Dachmodul 1 abgenommen werden.

Für die Reparatur oder den Ersatz einer Antenne 6 muss nun lediglich noch der Dachmodul-Rahmen 4 von den unteren Enden der Seitenwände 3 soweit auf Abstand gebracht werden, dass die Elektronik-Platine 7 mit der defekten Antenne 6 entweder aus dem entsprechenden Stützrohr 5 entfernt und ausgetauscht werden kann oder bei einer vergossenen Platine 7 das gesamte Stützrohr 5 entfernt werden kann und durch ein Stützrohr 5 mit einer darin befindlichen intakten Antenne 6 ersetzt werden kann.

Hierfür ist natürlich auch das Abstecken des Antennenkabels 16 von der Stecker-Schnittstelle 9 notwendig, was jedoch bei abgenommenen Dachmodul-Tragrahmen 4 ohne weiteres möglich ist und sogar bei noch vollständigem, aber vom Verteilerschrank 50 bereits abgenommenen, Zustand des Antennen-Dachmoduls 1 vom Innenraum 1' des Dachmoduls 1 her möglich ist.

### BEZUGSZEICHENLISTE

- 1: Antennen-Dachmodul
- 1': Innenraum
- 2: Dachelement
- 3: Seitenwand
- 4: Dachmodul-Rahmen
- 5: Stützelement, Stützrohr
- 6: Antenne, PCB-Antenne
- 7: Elektronik-Platine
- 8, 8': Aufnahme
- 9: Stecker-Schnittstelle
- 10: Vertikale, aufrechte Richtung
- 11.1: erste horizontale Richtung, Längsrichtung des Dachmoduls,
- 11.2: zweite horizontale Richtung, Querrichtung des Dachmoduls
- 12.1, 12.2: Abschirmung
- 12a: Rückseite
- 13: Durchgangsöffnung
- 14: Versorgungseinheit
- 15: Versorgungs-Kabel
- 16: Antennen-Kabel
- 17: Positionierelement
- 18: Kiemen, Luftdurchlass
- 19: Führung
- 20: Vergussmasse
- 21: Befestigungs-Fortsatz
- 21 a: senkrechte Streben
- 21 b: Querstrebe, Querrohr
- 22: Sicherungselement
- 23: Sicherungsöffnung
- 24: Ausnehmung
- 25: Kabel Durchlass-Element, Kabel tolle
- 26: Träger, Tragplatte
- 27: kritischer Bereich50 dachloser Verteilerschrank
- 50': Innenraum
- 51: Traggestell
- 52: Außen-Verkleidung
- 53a, b: Tür
- 54a-f: Innenblech
- 55: Sockel
- 55': Innenraum

## Patentansprüche

1. Antennen-Dachmodul (1) zum Aufsetzen und Befestigen auf einem dachlosen Verteilerschrank (50), wobei das Gehäuse des Antennen-Dachmoduls (1) aufweist:
- eine Antenne (6) im Antennen-Dachmodul (1),
- ein Dachelement (2),
- einen Dachmodul-Rahmen (4) unterhalb des Dachelementes (2) zum Befestigen am oberen Ende des dachlosen Verteilerschrankes (50),
- Seitenwände (3) zwischen dem Dachmodul-Rahmen (4) und den Rändern des Dachelementes (2), die zumindest teilweise, insbesondere vollständig, aus einem für die elektromagnetische Strahlung, emS, die von der Antenne abgegeben oder empfangen werden kann, durchlässigen emS-Material, insbesondere Kunststoff, bestehen,
- aufrechte Stützelemente (5) zwischen dem Dachmodul-Rahmen (4) und den Rändern des Dachelementes (2),
**dadurch gekennzeichnet, dass**
- die Antenne (6) eine PCB-Antenne (6) ist, und
- die PCB-Antenne (6) in einem Hohlraum angeordnet ist, welcher in einer der Seitenwände (3) oder in einem der Stützelemente (5) oder in dem Dachmodul-Rahmen (4) ausgebildet ist.

2. Antennen-Dachmodul nach Anspruch 1,
**dadurch gekennzeichnet, dass**
- die PCB-Antenne (6) auf einer, insbesondere streifenförmigen, Elektronik-Platine (7) des Antennen-Dachmoduls ausgebildet ist, von der ein flexibles Antennen-Kabel (16) abragt,
- wobei die Elektronik-Platine (7) auch die Antennen-Elektronik enthält.

3. Antennen-Dachmodul nach einem der vorhergehenden Ansprüche,
**dadurch gekennzeichnet, dass**
- das aufrechte Stützelement (5) ein Stützrohr (5) ist, in dessen Innerem die PCB-Antenne (6) angeordnet ist, und
- das Stützrohr (5) aus einem emS-Material besteht.

4. Antennen-Dachmodul nach Anspruch 3,
**dadurch gekennzeichnet, dass**
- das Stützrohr (5) stirnseitig wenigstens auf einer Seite offen ist, insbesondere an seinem unteren Ende,
- wobei das Stützrohr (5),
- entweder am oberen Ende einstückig mit dem Dachelement (2) ausgebildet ist,
- oder ein separates Bauteil ist, welches an dem Dachelement (2) befestigt ist, insbesondere mit seinem oberen Ende formschlüssig in eine Aufnahme (8) in der Unterseite des Dachelements (2) eingesteckt ist.

5. Antennen-Dachmodul nach Anspruch 2 in Kombination mit Anspruch 3 oder Anspruch 4,
**dadurch gekennzeichnet, dass**
die Elektronik-Platine (7)
- formschlüssig in vertikal verlaufenden Führungen (19) im Inneren des Stützrohres (5), eingeschoben ist, insbesondere von unten eingeschoben ist
und/oder
- die Elektronik-Platine (7) eine Vergussmasse (20) umfasst, wobei die Elektronik-Platine (7) abseits der PCB-Antenne (6) mit der Vergussmasse (20) aus aushärtendem Kunststoff umgossen ist, insbesondere im Stützrohr (5) vergossen ist.

6. Antennen-Dachmodul nach einem der vorhergehenden Ansprüche,
**dadurch gekennzeichnet, dass**
- die Seitenwände (3) formschlüssig zwischen dem Dachelement (2) und dem Dachmodul-Rahmen (4) gehalten sind
und/oder
- die Seitenwände (3) Luftdurchlässe (18), vorzugsweise in Form von Zwischenräumen zwischen Kiemen (18), aufweisen.

7. Antennen-Dachmodul nach einem der vorhergehenden Ansprüche,
**dadurch gekennzeichnet, dass**
das Antennen-Dachmodul (1) eine Stecker-Schnittstelle (9) umfasst, an der
- einerseits die eine oder mehreren PCB-Antennen (6) mittels ihres Antennen-Kabels (16) angesteckt sind,
- andererseits die im Verteilerschrank (50) angeordnete Antennen-Versorgungseinheit (14) mittels ihres Versorgungs-Kabels (15) ansteckbar ist.

8. Antennen-Dachmodul nach Anspruch 3, vorzugsweise in Kombination mit einem der übrigen vorhergehenden Ansprüche ,
**dadurch gekennzeichnet, dass**
- das Dachelement (2), die Seitenwände (3) und Stützrohre (5), in denen sich PCB-Antennen (6) befinden, aus einem emS-Material, insbesondere Kunststoff, bestehen,
- im Bereich oberhalb der PCB-Antenne (6), insbesondere an der Unterseite des Dachelementes (2), eine Abschirmung (12.1) aus einem emS-Schirmmaterial angeordnet ist,
- bei in einem Stützrohr (5) angeordneter PCB-Antenne (6) im Stützrohr (5) oberhalb der PCB-Antenne (6) eine Abschirmung (12.2) aus einem emS-Schirmmaterial angeordnet ist, insbesondere in einem kritischen Bereich (27) unmittelbar oberhalb der PCB-Antenne (6).

9. Antennen-Dachmodul nach Anspruch 8,
**dadurch gekennzeichnet, dass**
- die Abschirmung (12.1) aus emS-Schirmmaterial am Antennen-Dachmodul (1) verklebt ist, insbesondere die Abschirmung (12.1) eine selbstklebende Rückseite (12a) aufweist,
und/oder
- die Abschirm-Eigenschaften des emS-Schirmmaterials und die mit emS-Schirmmaterial bedeckten Flächen so ausgebildet sind, dass bei einer definierten Sendeleistung an keinem Punkt der Außenseite des Antennen-Dachmoduls (1) und/oder des Verteilerschrankes (50) die zulässigen maximalen Strahlungswerte überschritten werden.

10. Antennen-Dachmodul nach einem der vorhergehenden Ansprüche,
**dadurch gekennzeichnet, dass**
- das Dachelement (2),
- der Dachmodul-Rahmen (4) und
- die Seitenwände (3)
mittels Verbindungselementen des Antennen-Dachmoduls zu einer gemeinsam handhabbaren Einheit verbunden sind, wobei die Verbindungselemente von der Unterseite des Antennen-Dachmoduls (1) her zugänglich sind.

11. **System,** umfassend einen Verteilerschrank (50) und ein Antennen-Dachmodul (1),
**dadurch gekennzeichnet, dass**
- auf dem Verteilerschrank (50) das Antennen-Dachmodul (1) nach einem der vorhergehenden Ansprüche montiert ist,
- wobei vorzugsweise die Oberseite eines Traggestells (51) des Verteilerschrankes (50) von einem Innenblech (54a) des Innengehäuses des Verteilerschrankes (50) abgedeckt ist.

12. System nach Anspruch 11,
**dadurch gekennzeichnet, dass**
- in einem die Oberseite des Traggestells (51) abdeckenden Innenblech (54a) möglichst nah, insbesondere direkt darüber oder darunter, eine Durchgangsöffnung (13) zum Hindurchführen von zu einer Stecker-Schnittstelle (9) des Systems führenden Kabeln (15, 16) angeordnet ist,
- die vorzugsweise im montierten Zustand durch die darauf aufsitzende Stecker-Schnittstelle (9) verschlossen ist und
- insbesondere eine Dichtung gegen Staub und Feuchtigkeit zwischen den Rändern der Durchgangsöffnung (13) und der Unterseite der Stecker-Schnittstelle (9) vorhanden ist.

13. System nach Anspruch 11 oder 12 mit Antennen-Dachmodul (1) nach Anspruch 10,
**dadurch gekennzeichnet, dass**
die Verbindungselemente bei auf dem Verteilerschrank (50) montierten Antennen-Dachmodul (1) bei geöffneten Türen (53a, b) vom Innenraum (50') des Verteilerschrankes (50) aus zugänglich sind.

14. System nach einem der Ansprüche 11 bis 13 mit Antennen-Dachmodul nach Anspruch 7,
**dadurch gekennzeichnet, dass**
- die Stecker-Schnittstelle (9) an einer solchen Position befestigt ist, die nach Öffnen der Türen (53a, b) des Verteiler-Schrankes (50) gut zugänglich ist,
und/oder
die Stecker-Schnittstelle (9)
- am Dachmodul-Rahmen (4) befestigt, insbesondere verschraubt, ist und im Innenraum (1') des Antennen-Dachmoduls (1) positioniert ist
- oder die Stecker-Schnittstelle (9) im Innenraum (50') des Verteilerschrankes (50) positioniert ist und entweder an dessen Traggestell (51) oder der Innenseite eines der Innenbleche (54 a bis f), die als Innengehäuse am Traggestell (51) befestigt, insbesondere verschraubt, sind.

15. **Verfahren** zum Ausstatten eines Verteilerschrankes (50) mit einer Antenne,
**dadurch gekennzeichnet, dass**
- ein Antennen-Dachmodul (1) nach einem der Ansprüche 1 - 10, erstellt wird, indem
- die PCB-Antenne (6) in dem Hohlraum angeordnet wird,
- eine Stecker-Schnittstelle (9) am Dachmodul-Rahmen (4) oder im Verteilerschrank, insbesondere innerhalb dessen Schirm-Blechen (54 a, b) befestigt wird,
- das Dachelement (2), die Seitenwände (3) und der Dachmodul-Rahmen (4) zu dem Gehäuse des Antennen-Dachmoduls (1) mittels Verbindungselementen (17) verbunden werden,
- ein Antennen-Kabel (16) sowie ein Versorgung-Kabel (15) an der Stecker-Schnittstelle (9) kontaktierend befestigt werden,
- das Antennen-Dachmodul (1) auf dem dachlosen Verteilerschrank (50) aufgesetzt und an diesem befestigt wird.

16. Verfahren nach Anspruch 15,
**dadurch gekennzeichnet, dass**
- entweder bei einem am Antennen-Dachmodul (1), insbesondere dessen Dachmodul-Rahmen (4), befestigten Stecker-Schnittstelle das Antennen-Kabel (16) vor dem Befestigen des Antennen-Dachmoduls (1) auf dem Verteilerschrank (50) angesteckt wird, das Versorgungs-Kabel (15) erst danach,
oder
- bei einer am Verteilerschrank (50) befestigten Stecker-Schnittstelle (9) das Versorgungs-Kabel (15) vor dem Befestigen des Antennen-Dachmoduls (1) auf dem Verteilerschrank (50) angesteckt wird, das Antennen-Kabel (16) erst danach.

17. Verfahren nach einem der vorhergehenden Verfahrensansprüche,
**dadurch gekennzeichnet, dass**
vor oder nach dem Befestigen der PCB-Antenne (6) eine Abschirmung (12) aus emS-Schirmmaterial im Inneren des Antennen-Dachmoduls (1), insbesondere an der Innenseite des Dachelementes (2) und/oder am oder im Stützelement (5), befestigt wird.

18. Verfahren nach Anspruch 17,
**dadurch gekennzeichnet, dass**
die Abschirm-Eigenschaften des emS-Schirmmaterials und die mit emS-Schirmmaterial bedeckten Flächen so gewählt werden, das an keinem Punkt der Außenseite des Antennen-Dachmoduls (1) und/oder des Verteilerschrankes (50) die zulässigen maximalen Immissionswerte an elektromagnetischer Strahlung für Menschen überschritten werden.

19. Verfahren nach einem der vorhergehenden Verfahrensansprüche,
**dadurch gekennzeichnet, dass**
- die in der Aufsicht betrachtete Einbaulage der PCB-Antenne (6), also die Ausrichtung der Hauptebene ihrer Platine (7) zur Längserstreckung, in der Regel der Frontseite, des Verteilerschrankes (50) in Abhängigkeit der Umgebung und gewünschten Abstrahl-Richtung am Einsatzort festgelegt wird,
und/oder
- zum Nachrüsten eines bereits bestehenden Verteilerschrankes (50) dessen Dach oder Dachmodul abgenommen und durch ein Antennen-Dachmodul (1) ersetzt wird.

## Claims

1. **Antenna roof module** (1) for mounting and fixing on a roofless distribution cabinet (50), wherein the housing of the antenna roof module (1) comprises:
- an antenna (6) in the antenna roof module (1),
- a roof element (2),
- a roof module frame (4) below the roof element (2) for attachment to the top of the roofless distribution cabinet (50),
- side walls (3) between the roof module frame (4) and the edges of the roof element (2), which consist at least partially, in particular completely, of an emS material, in particular plastic, which is permeable to the electromagnetic radiation, emS, which can be emitted or received by the antenna,
- upright support elements (5) between the roof module frame (4) and the edges of the roof element (2),
**characterized in that**
- the antenna (6) is a PCB antenna (6), and
- the PCB antenna (6) is arranged in a cavity formed in one of the side walls (3) or in one of the support elements (5) or in the roof module frame (4).

2. Antenna roof module according to claim 1,
**characterized in that**
- the PCB antenna (6) is formed on an, in particular strip-shaped, electronics board (7) of the antenna roof module, from which a flexible antenna cable (16) projects,
- the electronics board (7) also containing the antenna electronics.

3. Antenna roof module according to one of the preceding claims,
**characterized in that**
- the upright support element (5) is a support tube (5), inside which the PCB antenna (6) is arranged, and
- the support tube (5) is made of an emS material.

4. Antenna roof module according to claim 3,
**characterized in that**
- the support tube (5) is open at the end face at least on one side, in particular at its lower end,
- wherein the support tube (5),
- either being formed integrally with the roof element (2) at the upper end
- or is a separate component which is fastened to the roof element (2), in particular is inserted with its upper end in a form-fitting manner into a receptacle (8) in the underside of the roof element (2).

5. Antenna roof module according to claim 2 in combination with claim 3 or claim 4,
**characterized in that**
the electronics board (7)
- is in a form-fitting manner inserted in vertically extending guides (19) in the interior of the support tube (5), in particular is inserted from below
and/or
- the electronics board (7) comprises a casting compound (20), the electronics board (7) being encapsulated away from the PCB antenna (6) with the casting compound (20) of hardening plastic, in particular being cast in the support tube (5).

6. Antenna roof module according to one of the preceding claims,
**characterized in that**
- the side walls (3) are held in a form-fitting manner between the roof element (2) and the roof module frame (4)
and/or
- the side walls (3) have air passages (18), preferably in the form of gaps between gills (18).

7. Antenna roof module according to one of the preceding claims,
**characterized in that**
the antenna roof module (1) comprises a connector interface (9) to which
- on the one hand, the one or more PCB antennas (6) are plugged in by means of their antenna cable (16),
- on the other hand, the antenna supply unit (14) arranged in the distributor cabinet (50) can be plugged in by means of its supply cable (15).

8. Antenna roof module according to claim 3, preferably in combination with one of the other preceding claims,
**characterized in that**
- the roof element (2), the side walls (3) and support tubes (5) in which PCB antennas (6) are located are made of an emS material, in particular plastic,
- in the region above the PCB antenna (6), in particular on the underside of the roof element (2), a shield (12.1) made of an emS shielding material is arranged,
- with the PCB antenna (6) arranged in a support tube (5), a shielding (12.2) made of an emS shielding material is arranged in the support tube (5) above the PCB antenna (6), in particular in a critical region (27) directly above the PCB antenna (6).

9. Antenna roof module according to claim 8,
**characterized in that**
- the shielding (12.1) of emS shielding material is bonded to the antenna roof module (1), in particular the shielding (12.1) has a self-adhesive rear side (12a),
and/or
- the shielding properties of the emS shielding material and the surfaces covered with emS shielding material are designed in such a way that the permissible maximum radiation values are not exceeded at any point on the outside of the antenna roof module (1) and/or the distribution cabinet (50) at a defined transmission power.

10. Antenna roof module according to any one of the preceding claims,
**characterized in that**
- the roof element (2),
- the roof module frame (4) and
- the side walls (3)
are connected by means of connecting elements of the antenna roof module to form a jointly manageable unit, the connecting elements being accessible from the underside of the antenna roof module (1).

11. **System** comprising a distribution cabinet (50) and an antenna roof module (1),
**characterized in that**
- the antenna roof module (1) according to one of the preceding claims is mounted on the distribution cabinet (50),
- wherein preferably the upper side of a support frame (51) of the distribution cabinet (50) is covered by an inner sheet (54a) of the inner housing of the distribution cabinet (50).

12. System according to claim 11,
**characterized in that**
- in an inner sheet (54a) covering the upper side of the support frame (51), as close as possible, in particular directly above or below it, a through opening (13) is arranged for the passage of cables (15, 16) leading to a plug interface (9) of the system,
- which is preferably closed in the assembled state by the plug interface (9) resting thereon, and
- in particular a seal against dust and moisture is provided between the edges of the through opening (13) and the underside of the plug interface (9).

13. System according to claim 11 or 12 with antenna roof module (1) according to claim 10,
**characterized in that**
the connection elements are accessible from the interior (50') of the distribution cabinet (50) when the antenna roof module (1) is mounted on the distribution cabinet (50) with the doors (53a, b) open.

14. System according to any one of claims 11 to 13 with antenna roof module according to claim 7,
**characterized in that**
- the connector interface (9) is fixed at such a position that is easily accessible after opening the doors (53a, b) of the distribution cabinet (50),
and/or
the plug interface (9)
- is fastened, in particular screwed, to the roof module frame (4) and is positioned in the interior (1') of the antenna roof module (1)
- or the plug interface (9) is positioned in the interior (50') of the distribution cabinet (50) and is attached, in particular screwed, either to its supporting frame (51) or to the inside of one of the inner sheets (54 a to f) which are attached, in particular screwed, to the supporting frame (51) as an inner housing.

15. **Method** for equipping a distribution cabinet (50) with an antenna,
**characterized in that**
- an antenna roof module (1) according to one of the claims 1 -10, is created in that
- the PCB antenna (6) is placed in the cavity,
- a connector interface (9) is fixed to the roof module frame (4) or in the distribution cabinet, in particular within its shielding plates (54 a, b),
- the roof element (2), the side walls (3) and the roof module frame (4) are connected to the housing of the antenna roof module (1) by means of connecting elements (17)
- an antenna cable (16) and a supply cable (15) are attached to the connector interface (9) in a contacting manner,
- the antenna roof module (1) is placed on the roofless distribution cabinet (50) and fastened thereto.

16. Method according to claim 15,
**characterized in that**
- either in the case of a plug interface fastened to the antenna roof module (1), in particular its roof module frame (4), the antenna cable (16) is plugged in before the antenna roof module (1) is fastened to the distributor cabinet (50), and the supply cable (15) is plugged in only afterwards,
or
- in the case of a plug interface (9) fastened to the distributor cabinet (50), the supply cable (15) is plugged in before the antenna roof module (1) is fastened to the distributor cabinet (50), and the antenna cable (16) is plugged in only afterwards.

17. Method according to one of the preceding method claims,
**characterized in that**
a shield (12) made of emS shielding material is fastened inside the antenna roof module (1), in particular on the inside of the roof element (2) and/or on or in the support element (5), before or after fastening the PCB antenna (6).

18. Method according to claim 17,
**characterized in that**
the shielding properties of the emS shielding material and the surfaces covered with emS shielding material are selected in such a way that at no point on the outside of the antenna roof module (1) and/or the distribution cabinet (50) are the permissible maximum immission values for electromagnetic radiation for humans exceeded.

19. Method according to one of the preceding method claims,
**characterized in that**
- the installation position of the PCB antenna (6) seen in the top view, i.e. the alignment of the main plane of its PCB (7) with respect to the longitudinal extension, generally the front side, of the distribution cabinet (50) is determined as a function of the environment and desired radiation direction at the place of use,
and/or
- for retrofitting an already existing distribution cabinet (50), its roof or roof module is removed and replaced by an antenna roof module (1).

## Revendications

1. Module de toit d'antenne (1) destiné à être monté et fixé sur une armoire de distribution sans toit (50), le boîtier du module de toit d'antenne (1) comprenant :
- une antenne (6) dans le module de toit d'antenne (1),
- un élément de toit (2),
- un cadre de module de toit (4) sous l'élément de toit (2) pour la fixation à l'extrémité supérieure de l'armoire de distribution sans toit (50),
- des parois latérales (3) entre le cadre de module de toit (4) et les bords de l'élément de toit (2), qui sont réalisées au moins partiellement, en particulier complètement, en un matériau emS, en particulier en matière plastique, qui est perméable au rayonnement électromagnétique, emS, qui peut être émis ou reçu par l'antenne,
- des éléments de support verticaux (5) entre le cadre de module de toit (4) et les bords de l'élément de toit (2),
**caractérisé en ce que**
- l'antenne (6) est une antenne PCB (6), et
- l'antenne PCB (6) est disposée dans une cavité formée dans l'une des parois latérales (3) ou dans l'un des éléments de support (5) ou dans le cadre de module de toit (4).

2. Module de toit d'antenne selon la revendication 1, **caractérisé en ce que**
- l'antenne PCB (6) est formée sur une carte électronique (7), en particulier en forme de bande, du module de toit d'antenne, de laquelle dépasse un câble d'antenne flexible (16),
- dans lequel la carte électronique (7) contient également l'électronique de l'antenne.

3. Module de toit d'antenne selon l'une des revendications précédentes,
**caractérisé en ce que**
- l'élément de support vertical (5) est un tube de support (5) à l'intérieur duquel l'antenne PCB (6) est disposée, et
- le tube de support (5) est constitué d'un matériau emS.

4. Module de toit d'antenne selon la revendication 3,
**caractérisé en ce que**
- le tube de support (5) est ouvert sur la face frontale sur au moins un côté, en particulier à son extrémité inférieure,
- dans lequel le tube de support (5),
- soit est formé d'un seul tenant avec l'élément de toit (2) à l'extrémité supérieure,
- soit est un composant séparé qui est fixé à l'élément de toit (2), en particulier est insérée avec son extrémité supérieure par complémentarité de forme dans un réceptacle (8) dans la face inférieure de l'élément de toit (2).

5. Module de toit d'antenne selon la revendication 2 en combinaison avec la revendication 3 ou la revendication 4,
**caractérisé en ce que**
la carte électronique (7)
- est inséré par complémentarité de forme dans des guides (19) s'étendant verticalement à l'intérieur du tube de support (5), en particulier est inséré par le bas
et/ou
- la carte électronique (7) comprend une masse de coulée (20), la carte électronique (7) étant encapsulée à l'écart de l'antenne PCB (6) avec la masse de coulée (20) en matière plastique durcissable, en particulier étant coulée dans le tube de support (5).

6. Module de toit d'antenne selon l'une des revendications précédentes,
**caractérisé en ce que**
- les parois latérales (3) sont maintenues par complémentarité de forme entre l'élément de toit (2) et le cadre de module de toit (4),
et/ou
- les parois latérales (3) comprennent des passages d'air (18), de préférence sous la forme d'espaces entre des grilles (18).

7. Module de toit d'antenne selon l'une des revendications précédentes,
**caractérisé en ce que**
le module de toit d'antenne (1) comprend une interface de connecteur (9) sur laquelle
- d'une part, l'une ou plusieurs antennes PCB (6) sont branchées au moyen de leur câble d'antenne (16),
- d'autre part, l'unité d'alimentation d'antenne (14) disposée dans l'armoire de distribution (50) peut être branchée au moyen de son câble d'alimentation (15).

8. Module de toit d'antenne selon la revendication 3, de préférence en combinaison avec l'une des autres revendications précédentes,
**caractérisé en ce que**
- l'élément de toit (2), les parois latérales (3) et les tubes de support (5) dans lesquels sont placées les antennes PCB (6) sont faits d'un matériau emS, en particulier de plastique,
- un blindage (12.1) en matériau de blindage emS est disposé dans la zone au-dessus de l'antenne PCB (6), en particulier sur la face inférieure de l'élément de toit (2),
- dans le cas d'une antenne PCB (6) disposée dans un tube support (5), un blindage (12.2) en matériau de blindage emS est disposé dans le tube de support (5) au-dessus de l'antenne PCB (6), en particulier dans une zone critique (27) directement au-dessus de l'antenne PCB (6).

9. Module de toit d'antenne selon la revendication 8,
**caractérisé en ce que**
- le blindage (12.1) en matériau de blindage emS est collé au module de toit d'antenne (1), en particulier le blindage (12.1) présente une face arrière autocollante (12a),
et/ou
- les propriétés de blindage du matériau de blindage emS et les surfaces recouvertes du matériau de blindage emS sont conçues de telle sorte que les valeurs de rayonnement maximales admissibles ne sont dépassées en aucun point de la face extérieure du module de toit d'antenne (1) et/ou de l'armoire de distribution (50) pour une puissance d'émission définie.

10. Module de toit d'antenne selon l'une des revendications précédentes,
**caractérisé en ce que**
- l'élément de toit (2),
- le cadre de module de toit (4) et
- les parois latérales (3)
sont reliés au moyen d'éléments de connecteur du module de toit d'antenne pour former une unité gérable conjointement, les éléments de connecteur étant accessibles depuis la face inférieure du module de toit d'antenne (1).

11. Système comprenant une armoire de distribution (50) et un module de toit d'antenne (1),
**caractérisé en ce que**
- le module de toit d'antenne (1) selon l'une des revendications précédentes est monté sur l'armoire de distribution (50),
- dans lequel, de préférence, le côté supérieur d'un cadre de support (51) de l'armoire de distribution (50) est couvert par une tôle intérieure (54a) du boîtier intérieur de l'armoire de distribution (50).

12. Système selon la revendication 11,
**caractérisé en ce que**
- dans une tôle intérieure (54a) recouvrant le côté supérieur du cadre de support (51), aussi près que possible, en particulier directement au-dessus ou au-dessous de celui-ci, une ouverture de passage (13) est disposée pour le passage de câbles (15, 16) menant à une interface de connecteur (9) du système,
- qui est de préférence fermée à l'état monté par l'interface de connecteur (9) reposant sur elle, et
- en particulier une étanchéité à la poussière et à l'humidité est assurée entre les bords de l'ouverture de passage (13) et la face inférieure de l'interface de connecteur (9).

13. Système selon la revendication 11 ou 12 avec un module de toit d'antenne (1) selon la revendication 10,
**caractérisé en ce que**
les éléments de connecteur sont accessibles depuis l'intérieur (50') de l'armoire de distribution (50) lorsque le module de toit d'antenne (1) est monté sur l'armoire de distribution (50) avec les portes (53a, b) ouvertes.

14. Système selon l'une des revendications 11 à 13 avec un module de toit d'antenne selon la revendication 7,
**caractérisé en ce que**
- l'interface de connecteur (9) est fixée à une position telle qu'elle est facilement accessible après l'ouverture des portes (53a, b) de l'armoire de distribution (50),
et/ou
l'interface de connecteur (9)
- est fixé, en particulier vissé, au cadre de module de toit (4) et est positionné à l'intérieur (1') du module de toit d'antenne (1),
- ou l'interface de connecteur (9) est positionnée à l'intérieur (50') de l'armoire de distribution (50) et est fixée, en particulier vissée, soit à son cadre de support (51), soit à la face intérieure de l'une des tôles intérieures (54 a à f) qui sont fixées, en particulier vissées, au cadre de support (51) en tant que boîtier intérieur.

15. **Procédé** pour équiper une armoire de distribution (50) avec une antenne,
**caractérisé en ce que**
- un module de toit d'antenne (1) selon l'une des revendications 1-10 est réalisé en
- disposant l'antenne PCB (6) dans la cavité,
- fixant une interface de connecteur (9) au cadre de module de toit (4) ou dans l'armoire de distribution, en particulier à l'intérieur de ses tôles de blindage (54 a, b),
- reliant l'élément de toit (2), les parois latérales (3) et le cadre de module de toit (4) au boîtier du module de toit d'antenne (1) au moyen d'éléments de liaison (17),
- fixant un câble d'antenne (16) et un câble d'alimentation (15) à l'interface de connecteur (9) de manière à être en contact,
- plaçant le module de toit d'antenne (1) sur l'armoire de distribution sans toit (50) et en le fixant à celle-ci.

16. Procédé selon la revendication 15,
**caractérisé en ce que**
- soit dans le cas d'une interface de connecteur fixée sur le module de toit d'antenne (1), en particulier sur son cadre de module de toit (4), le câble d'antenne (16) est branché avant la fixation du module de toit d'antenne (1) sur l'armoire de distribution (50) et le câble d'alimentation (15) n'est branché qu'après,
soit
- dans le cas d'une interface de connecteur (9) fixée à l'armoire de distribution (50), le câble d'alimentation (15) est branché avant la fixation du module de toit d'antenne (1) à l'armoire de distribution (50) et le câble d'antenne (16) n'est branché qu'ensuite.

17. Procédé selon l'une des revendications de procédé précédentes, **caractérisé en ce que**
un écran (12) de matériau de blindage emS est fixé à l'intérieur du module de toit d'antenne (1), en particulier sur l'intérieur de l'élément de toit (2) et/ou sur ou dans l'élément de support (5), avant ou après la fixation de l'antenne PCB (6).

18. Procédé selon la revendication 17,
**caractérisé en ce que**
les propriétés de blindage du matériau de blindage emS et des surfaces recouvertes du matériau de blindage emS sont choisies de telle sorte qu'en aucun point de l'extérieur du module de toit d'antenne (1) et/ou de l'armoire de distribution (50), les valeurs d'immission maximales admissibles du rayonnement électromagnétique pour les humains ne sont dépassées.

19. Procédé selon l'une des revendications de procédé précédentes,
**caractérisé en ce que**
- la position d'installation de l'antenne PCB (6) considérée dans la vue de dessus, c'est-à-dire l'orientation du plan principal de sa carte électronique (7) par rapport à l'extension longitudinale, généralement la face avant, de l'armoire de distribution (50) est déterminée en fonction de l'environnement et de la direction de rayonnement souhaitée sur le lieu d'utilisation,
et/ou
- pour le rééquipement d'une armoire de distribution (50) déjà existante, le toit ou le module de toit de celle-ci est retiré et remplacé par un module de toit d'antenne (1).
